# EUROPÄISCHE PATENTSCHRIFT

(11) **EP 4 127 505 B1**
(45) Veröffentlichungstag und Bekanntmachung des Hinweises auf die Patenterteilung: **24.04.2024**
(21) Anmeldenummer: 21710241.7
(22) Anmeldetag: 04.03.2021
(51) Int. Cl.: F16F 9/05

(54) **ABROLLKOLBEN FÜR EINE LUFTFEDER EINES KRAFTFAHRZEUGS**
ROLLING PISTON FOR A PNEUMATIC SPRING OF A MOTOR VEHICLE
PISTON POUR RESSORT PNEUMATIQUE DE VÉHICULE AUTOMOBILE

(30) Priorität: 23.03.2020 DE 102020203686
(43) Veröffentlichungstag der Anmeldung: 08.02.2023
(73) Patentinhaber: ZF Friedrichshafen AG, 88046 Friedrichshafen (DE)
(72) Erfinder: STIEGLITZ, Andre, 49086 Osnabrück (DE); MÜLLER, Ingolf, 76872 Minfeld (DE); NIEMÖLLER, Paul, 27793 Wildeshausen (DE); BÜRGMANN, Manfred, 88213 Ravensburg (DE); HELM, Eike, 49356 Diepholz (DE); WACKER, Arne, 28870 Ottersberg (DE)
(74) Vertreter: ZF Friedrichshafen AG
(86) Internationale Anmeldenummer: PCT/EP2021/055414
(87) Internationale Veröffentlichungsnummer: WO 2021/190893

(56) Entgegenhaltungen:
- DE-A1-102006 040 546
- US-A1- 2014 167 337
- US-B2- 9 157 529

## Beschreibung

Die Erfindung betrifft einen Abrollkolben für eine Luftfeder eines Kraftfahrzeugs sowie eine Luftfeder mit einem solchen Abrollkolben gemäß den Oberbegriffen der unabhängigen Patentansprüche.

Luftfedern für Kraftfahrzeuge, beispielsweise für luftgefederte Fahrzeugachsen von Lastkraftwagen, sind allgemein bekannt und weisen im Wesentlichen einen Deckel, einen Abrollkolben und einen dazwischen luftdicht eingespannten Rollbalg auf. Durch den Deckel, den Abrollkolben und den Rollbalg wird ein unter einem Betriebsdruck von beispielsweise 10 bar stehender Arbeitsraum begrenzt. Der Rollbalg rollt beim Einfedern der Luftfeder unter Ausbildung einer Rollfalte an einer Außenmantelfläche des Abrollkolbens ab. Der Abrollkolben wird auch als Tauchkolben bezeichnet.

Herkömmliche Abrollkolben sind zumeist hohltopfförmig ausgebildet und luftleitend mit dem Rollbalg, der auch als Luftfederbalg bezeichnet wird, verbunden. Hierdurch herrscht im Inneren des Abrollkolbens ein Innendruck, der eine Kraft auf die Innenwände des Abrollkolbens ausübt. Im Normalfall liegt der Rollbalg teilweise an der Außenmantelfläche des Abrollkolbens an. Hierbei drückt der im Rollbalg vorhandene Innendruck gegen die Außenmantelfläche des Abrollkolbens. Gleichzeitig übt der in dem Abrollkolben herrschende Innendruck eine dem Innendruck des Rollbalgs entgegenwirkende Kraft auf die Innenfläche des Abrollkolbens aus. Im sogenannten Ausfederungsfall liegt der Rollbalg überhaupt nicht an der Außenmantelfläche des Abrollkolbens an. Der Ausfederungsfall ist der kritischste der möglichen Belastungsfälle, da weiterhin ein Innendruck auf die Innenfläche des Abrollkolbens wirkt, jedoch keine dem Innendruck entgegenwirkende Druckkraft von außen auf die Außenmantelfläche einwirkt.

Aus der DE 10 2006 040 546 A1 ist ein Abrollkolben für eine Luftfeder eines Kraftfahrzeugs bekannt, der aus Kunststoff besteht. Eine Außenmantelfläche einer ringförmigen Außenwand des Abrollkolbens ist geeignet, in einem Einbauzustand des Abrollkolbens als Anlagefläche für einen Rollbalg der Luftfeder zu fungieren. Ein von der Außenwand umschlossener und zugleich konzentrisch zu der Außenwand angeordneter Kern, der als zentraler Zapfen bezeichnet wird, ist massiv ausgebildet. Der Kern erstreckt sich von einer Bodenseite des Abrollkolbens ausgehend in Richtung einer Mittelachse des Abrollkolbens. An den Kern sind Innenrippen angebunden, die als plattenförmige Stützstreben bezeichnet werden und die sich radial von dem Umfang des Kerns weg erstrecken. Außerhalb des Kerns und zugleich von der Außenwand umschlossen befindet sich eine ringförmig ausgebildete Zwischenwand, die als Versteifungszylinder bezeichnet wird. Der Abrollkolben ist in Verbindung mit einem separaten, ringförmig ausgebildeten Deckel einbaufertig. Durch den Deckel ist der Abrollkolben bodenseitig luftdicht verschlossen. In die Zwischenwand sind mehrere, voneinander umfangsmäßig beabstandete Durchgangsöffnungen eingebracht, welche einen inneren Druckraum und einen äußeren Druckraum des Abrollkolbens Luft leitend verbinden.

In einem Einbauzustand des Abrollkolbens können während eines Fahrbetriebs insbesondere in einem stirnseitigen Randbereich, dort, wo die Innenrippen auf den Außenumfang der bodenseitig abgewandten Stirnseite des Kerns treffen, lokale Spannungsspitzen auftreten. Diese Spannungsspitzen können auf Dauer Ausgangspunkte von Schädigungen des Abrollkolbens sein.

Aufgabe der Erfindung ist es, einen Abrollkolben bereitzustellen, der in einem Einbauzustand und während eines Fahrbetriebs keine kritischen Spannungszustände aufweist.

Diese Aufgabe wird gemäß der vorliegenden Erfindung gelöst durch einen gattungsgemäßen Abrollkolben, welcher zusätzlich die kennzeichnenden Merkmale des Patentanspruchs 1 aufweist.

Bevorzugte Ausführungsformen und Weiterbildungen sind Gegenstand der Unteransprüche und der nachfolgenden Beschreibung.

Die Erfindung sieht demnach einen Abrollkolben für eine Luftfeder eines Kraftfahrzeugs vor, wobei der Abrollkolben aus Kunststoff gebildet ist. Eine Außenmantelfläche einer ringförmigen Außenwand des Abrollkolbens ist geeignet, in einem Einbauzustand des Abrollkolbens als Anlagefläche für einen Rollbalg der Luftfeder zu fungieren. Ein von der Außenwand umschlossener und zugleich konzentrisch zu der Außenwand angeordneter Kern erstreckt sich von einer Bodenseite des Abrollkolbens ausgehend in Richtung einer Mittelachse des Abrollkolbens. Zumindest im Wesentlichen radial von dem Kern weg erstrecken sich Innenrippen. Erfindungsgemäß weist der Kern einen von der Bodenseite des Abrollkolbens beabstandeten Endbereich mit einer Stirnseite auf, die der Bodenseite des Abrollkolbens abgewandt ausgerichtet ist. In diese Stirnseite ist eine sich in Richtung der Bodenseite erstreckende und zugleich bodenseitig geschlossene Ausnehmung eingelassen, um in einem Einbauzustand des Abrollkolbens durch Schaffung einer Nachgiebigkeit lokale Spannungsspitzen in einem Randbereich der Stirnseite, dort, wo die Innenrippen auf den Außenumfang der Stirnseite treffen, zu vermeiden.

Eine solche Nachgiebigkeit wäre nicht gegeben, wenn der Endbereich des Kerns massiv ausgebildet wäre. Insbesondere ist die Ausnehmung in einer Draufsicht auf die Stirnseite zentral in die Stirnseite eingelassen. Insbesondere ist die Ausnehmung in einer Draufsicht auf die Stirnseite des Endbereichs von einem umlaufenden Rand umgeben. Insbesondere ist die Außenwand des Abrollkolbens zumindest im Wesentlichen hohlzylindrisch ausgebildet. Insbesondere ist die Außenwand konzentrisch zu der Mittelachse des Abrollkolbens angeordnet. Insbesondere ist der Abrollkolben als ein Spritzgussteil ausgebildet. Insbesondere ist der Abrollkolben aus einem thermoplastischen Kunststoff gebildet. Insbesondere sind die Außenwand und/oder der Kern und/oder der Endbereich des Kerns umfänglich geschlossen und zugleich rotationssymmetrisch ausgebildet. Insbesondere liegt die Ausnehmung auch in einem Einbauzustand des Abrollkolbens frei. Die Ausnehmung kann über ihren Verlauf in Erstreckungsrichtung der Mittelachse einen zumindest im Wesentlichen konstanten Querschnitt oder einen sich stetig verändernden Querschnitt aufweisen. Insbesondere weist die Ausnehmung über ihren Verlauf in Erstreckungsrichtung der Mittelachse einen sich nach der Bodenseite des Abrollkolbens hin stetig verkleinernden Querschnitt auf. Insbesondere erstrecken sich die Innenrippen in Ebenen, die die Mittelachse des Abrollkolbens beinhalten.

Bevorzugt weist der Endbereich des Kerns im Bereich der Ausnehmung zumindest im Wesentlichen einen Ringquerschnitt auf. Insbesondere ist der Ringquerschnitt als ein Kreisringquerschnitt oder als ein Mehrkantringquerschnitt ausgebildet. Der Ringquerschnitt kann über den Verlauf der Ausnehmung in Erstreckungsrichtung der Mittelachse einen zumindest im Wesentlichen konstanten Querschnitt oder einen sich stetig verändernden Querschnitt aufweisen. Insbesondere weist der Ringquerschnitt über den Verlauf der Ausnehmung in Richtung der Mittelachse einen sich nach der Stirnseite des Endbereichs hin stetig verjüngenden Querschnitt auf, um nach einem Spritzgießvorgang eine Entformung des Abrollkolbens in Richtung seiner Mittelachse zu ermöglichen.

Vorteilhaft befindet sich außerhalb des Kerns, und zugleich von der Außenwand umschlossen, eine ringförmig ausgebildete, luftundurchlässige Zwischenwand, die sowohl konzentrisch zu der Außenwand als auch konzentrisch zu dem Kern angeordnet ist. Die Luftundurchlässigkeit der Zwischenwand ist eine Voraussetzung dafür, dass der Abrollkolben kostengünstig in einem Arbeitsgang in einem Spritzgussverfahren einbaufertig herstellbar ist. In einem Einbauzustand in einem Kraftfahrzeug trägt der Abrollkolben einen Teil der Masse eines Fahrzeugaufbaus. Ein Großteil dieser Masse wird über die Zwischenwand in einen Luftfederträger weitergeleitet. Insbesondere ist die Zwischenwand umfänglich geschlossen und zugleich rotationssymmetrisch ausgebildet.

In vorteilhafter Weiterbildung der Erfindung umschließt die Zwischenwand einen, in einem Einbauzustand des Abrollkolbens, luftdichten Druckraum, der ebenfalls nach der Bodenseite und nach dem Kern hin luftundurchlässig ausgebildet ist. Insbesondere weist der Druckraum an der Bodenseite eine kreisringförmig ausgebildete Wandung auf.

Zweckmäßig sind der Kern und die Zwischenwand durch die sich zumindest im Wesentlichen radial von dem Kern weg erstreckenden Innenrippen miteinander verbunden. In einem Einbauzustand des Abrollkolbens in einem Kraftfahrzeug, bei dem der Druckraum beispielsweise mit einem in der Luftfeder wirkenden Betriebsdruck von 10 bar beaufschlagt ist, wird die Zwischenwand durch die Innenrippen auf einen konstanten Abstand zu dem Kern gehalten.

Vorteilhaft sind die sich zumindest im Wesentlichen radial von dem Kern weg erstreckenden Innenrippen, bei Betrachtung in einer senkrecht der Mittelachse ausgerichteten Ebene, Y-förmig ausgebildet, derart, dass jede Innenrippe in genau einem Anbindungspunkt an den Kern und in genau zwei Anbindungspunkten an die Zwischenwand angebunden ist. Steht der Druckraum beispielsweise unter einem Betriebsdruck von 10 bar, unterliegen die Innenrippen einer Zugbelastung. Zum radialen Stützen der Zwischenwand ist es erforderlich, dass die Anbindungspunkte der Innenrippen an die Innenmantelfläche der Zwischenwand in Umfangsrichtung dieser Innenmantelfläche einen geringen Abstand zueinander aufweisen, um ein lokales Ausbeulen der Zwischenwand unter dem herrschenden Betriebsdruck zu vermeiden. Hierzu wäre eine relativ große Anzahl von herkömmlichen, nicht Y-förmig ausgebildeten, Innenrippen erforderlich, die aus Platzgründen aber nicht alle an den Kern angebunden werden könnten, weil dieser einen nur relativ geringen Umfang aufweist. Durch die Y-förmig ausgebildeten Innenrippen in der zuvor beschriebenen Anordnung wird dieses Problem gelöst. Insbesondere weist der Abrollkolben eine gerade Anzahl, beispielsweise acht, von Y-förmig ausgebildeten Innenrippen auf. Alternativ kann der Abrollkolben auch eine ungerade Anzahl von Y-förmig ausgebildeten Innenrippen aufweisen.

Bevorzugt ist ein im Wesentlichen hohlzylindrisch ausgebildeter Zwischenraum, der zwischen der Zwischenwand und der Außenwand angeordnet ist, nach der Bodenseite hin offen ausgebildet. Dies ist eine Voraussetzung dafür, dass der Abrollkolben kostengünstig in einem Arbeitsgang in einem Spritzgussverfahren einbaufertig herstellbar ist.

Zweckmäßig sind die Zwischenwand und die Außenwand durch sich radial von der Zwischenwand weg erstreckende Außenrippen miteinander verbunden. Insbesondere erstrecken sich die Außenrippen in Ebenen, die die Mittelachse des Abrollkolbens beinhalten. Insbesondere schließen sich die Außenrippen, bei Betrachtung in einer senkrecht zu der Mittelache angeordneten Ebene, umfänglich versatzfrei an die Innenrippen an. "Umfänglich versatzfrei" ist in diesem Zusammenhang so zu verstehen, dass Anbindungspunkte der Innrippen an die Zwischenwand in Umfangsrichtung der Zwischenwand keinen Versatz zu Anbindungspunkten der Außenrippen an die Zwischenwand aufweisen. Dadurch ist eine in Bezug auf den Kraftfluss optimale Übertragung von Radialkräften gegeben, die von den Innenrippen auf die Außenrippen oder in umgekehrter Richtung zu übertragen sind. Genau genommen handelt es sich bei dem im Wesentlichen hohlzylindrisch ausgebildeten Zwischenraum nicht um einen einzigen Zwischenraum, sondern um mehrere kreisringförmig angeordnete Einzelzwischenräume, die senkrecht zu der Mittelachse jeweils einen Kreisringsegment-Querschnitt aufweisen, der durch zwei benachbarte Außenrippen, die Außenwand und die Zwischenwand begrenzt ist. Insbesondere sind die Außenrippen plattenförmig ausgebildet. Insbesondere weisen die Außenrippen an der Zwischenwand eine geringere Erstreckung in Richtung der Mittelachse auf als an der Außenwand.

Vorteilhaft weisen der Bodenseite abgewandt ausgerichtete Stirnseiten der Innenrippen, bei Betrachtung in Ebenen, die die Mittelachse des Abrollkolbens beinhalten, zumindest abschnittsweise einen konkav gekrümmten Verlauf auf. Durch diese Ausgestaltung kann die Masse des Abrollkolbens, gegenüber einer Ausführung mit geraden Stirnseiten der Innenrippen, um Volumenanteile reduziert werden, ohne dass die Stabilität des Abrollkolbens dadurch nennenswert verringert wird. Insbesondere entspricht der radiale Verlauf der Stirnseiten zumindest in Teilbereichen dem Verlauf einer elliptischen Kurve. Insbesondere bilden Stirnseiten von zwei Innenrippen, die in einer gemeinsamen Ebene angeordnet sind, die die Mittelachse des Abrollkolbens beinhaltet, und die sich zugleich in exakt entgegengesetzten Richtungen von dem Kern weg erstrecken, zusammen Teile einer Parabel, deren Scheitelpunkt auf der Mittelachse des Abrollkolbens liegt.

Gemäß einer Weiterbildung der Erfindung geht das der Bodenseite abgewandte Ende der Zwischenwand in einen umlaufenden Stutzen zur Anbindung eines Rollbalgs an den Abrollkolben über, wobei das der Bodenseite abgewandte Ende der Zwischenwand einen Innendurchmesser aufweist, der vorteilhaft um mehr als die doppelte, bevorzugt um mehr als die dreifache und besonders bevorzugt um im Wesentlichen die vierfache Wandstärke der Zwischenwand kleiner ist als der Innendurchmesser des Stutzens. Insbesondere ist die Innendurchmesserreduzierung von dem Stutzen auf das der Bodenseite abgewandte Ende der Zwischenwand, bei Betrachtung in einer Schnittebene, die die Mittelachse beinhaltet, zur Vermeidung von Spannungsspitzen S-Schlag-förmig ausgebildet. Durch die S-Schlag-förmig ausgebildete Innendurchmesserreduzierung wird die Struktursteifigkeit der Zwischenwand erhöht und zugleich einem Ausbeulen der Zwischenwand entgegengewirkt, wenn diese mit einem Betriebsdruck von beispielsweise 10 bar beaufschlagt ist. Zugleich wird der Druckraum verkleinert, was bei gleichem Betriebsdruck gegenüber einer nicht im Innendurchmesser reduzierten Zwischenwand zu einer geringeren Belastung der Innenrippen führt. Die Innenumfangsfläche der Zwischenwand ist bei gleichem Betriebsdruck in dem Druckraum maßgeblich für die Belastungen, die auf die Innenrippen einwirken. Durch die S-Schlag-förmig ausgebildete Innendurchmesserreduzierung bedingt, weisen die Außenrippen an der Zwischenwand eine geringere Erstreckung in Richtung der Mittelachse auf als an der Außenwand.

Vorteilhaft weist der Kern einen rotationssymmetrisch zu der Mittelachse ausgebildeten Dom zur werkzeuglos lösbaren Anbindung des Abrollkolbens an ein Anschlussbauteil über eine Kegelverbindung auf, wobei der Dom nach der Bodenseite hin offen ausgebildet ist und sich nach der Ausnehmung hin konisch verjüngt. Insbesondere weist der Dom einen Kegelwinkel von weniger als 45 Grad, vorzugsweise von 30 Grad, auf. Insbesondere wird der Abrollkolben in einem Einbauzustand über den Dom und unter Ausbildung einer Kontaktfläche, die nach Art einer Mantelfläche eines Kegelstumpfs ausgebildet ist, von einer kegelstumpfförmigen Aufnahme mit gleichem Kegelwinkel aufgenommen.

Bevorzugt ist der Abrollkolben in einem Arbeitsgang in einem Spritzgussverfahren einbaufertig herstellbar. Diese kostengünstige Herstellung ist unter anderem deshalb möglich, weil der im Wesentlichen hohlzylindrisch ausgebildete Zwischenraum, der zwischen der Zwischenwand und der Außenwand angeordnet ist, nach der Bodenseite hin offen ausgebildet ist und weil die Zwischenwand luftundurchlässig ausgebildet ist.

Die Erfindung bezieht sich weiterhin auf eine Luftfeder für ein Kraftfahrzeug, wobei die Luftfeder einen Abrollkolben wie zuvor beschrieben aufweist. Ein Rollbalg der Luftfeder ist luftdicht an einen Stutzen des Abrollkolbens angebunden. Insbesondere ist die Luftfeder zur Federung einer luftgefederten Achse, insbesondere einer luftgefederten Starrachse, eines Kraftfahrzeugs geeignet. Insbesondere ist eine kreisringförmig ausgebildete Wandung einer Bodenseite des Abrollkolbens geeignet, sich in einem Einbauzustand der Luftfeder an eine ebene Tragfläche eines Luftfederträgers flächig abzustützen. Insbesondere handelt es sich bei dem Kraftfahrzeug um ein Nutzfahrzeug.

Im Folgenden wird die Erfindung anhand lediglich ein Ausführungsbeispiel darstellender Zeichnungsfiguren näher erläutert, wobei sich gleiche Bezugszeichen auf gleiche Bauteile oder Elemente beziehen. Dabei zeigt:
- Fig. 1: in einer perspektivischen Ansicht von schräg unten eine Fahrwerkanordnung gemäß dem Stand der Technik;
- Fig. 2: in einer Längsschnitt-Darstellung eine Luftfeder mit einem Abrollkolben gemäß der Erfindung;
- Fig. 3: in einer Längsschnitt-Darstellung den Abrollkolben aus Figur 2;
- Fig. 4: in einer perspektivischen Darstellung von schräg oben den Abrollkolben aus Figur 3;
- Fig. 5: in einer Querschnitt-Darstellung gemäß dem in Figur 3 angegebenen Schnittverlauf A - A den Abrollkolben aus Figur 3; und
- Fig. 6: in einer Querschnitt-Darstellung gemäß dem in Figur 3 angegebenen Schnittverlauf B - B den Abrollkolben aus Figur 3.

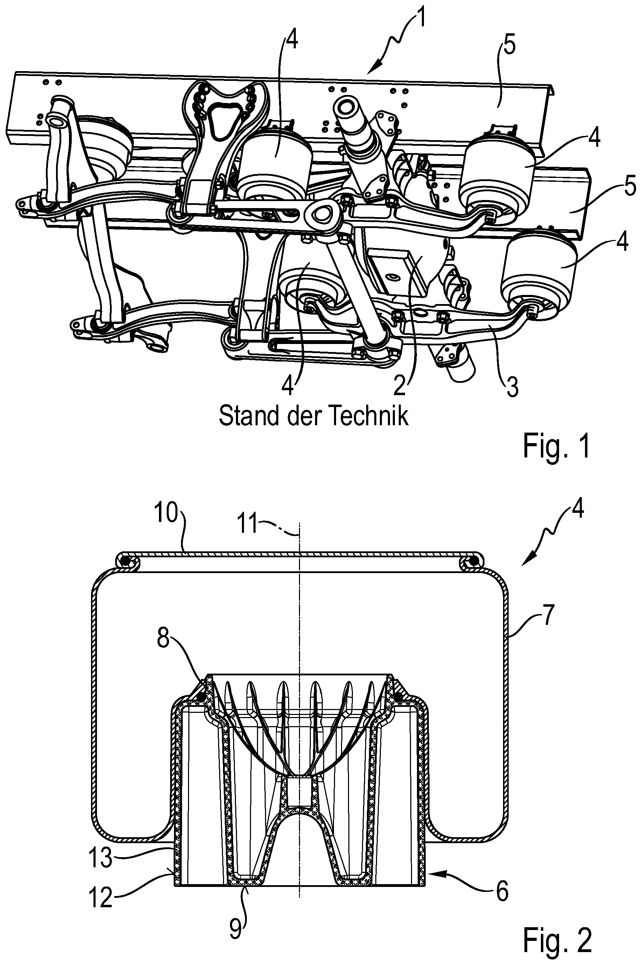

Fig. 1 zeigt eine aus dem Stand der Technik bekannte Fahrwerkanordnung 1 eines Kraftfahrzeugs, das als ein Nutzfahrzeug ausgebildet ist. Die Fahrwerkanordnung 1 weist eine luftgefederte Starrachse 2 auf, die über jeweils einen Luftfederträger 3 pro Fahrzeugseite und insgesamt vier Luftfedern 4 an zwei, sich parallel zueinander erstreckende, Längsträger 5 eines Fahrzeugrahmens angebunden ist.

Fig. 2 zeigt eine Luftfeder 4 für ein Nutzfahrzeug, wobei die Luftfeder 4 einen Abrollkolben 6 aufweist, der aus einem thermoplastischen Kunststoff besteht und der in einem Arbeitsgang in einem Spritzgussverfahren einbaufertig hergestellt ist. Ein Rollbalg 7 der Luftfeder 4 ist luftdicht an einen Stutzen 8 des Abrollkolbens 6 angebunden. Die Luftfeder 4 ist zur Federung einer luftgefederten Starrachse 2 eines Kraftfahrzeugs geeignet. Eine Bodenseite 9 des Abrollkolbens 6 ist in einem Einbauzustand der Luftfeder 4 einem Luftfederträger 3 zugewandt. Über einen Deckel 10, der parallel beabstandet zu der Bodenseite 9 angeordnet ist, kann die Luftfeder 4 an einen Längsträger 5 eines Fahrzeugrahmens eines Nutzfahrzeugs angebunden werden. Eine Mittelachse 11 des Abrollkolbens 6 ist deckungsgleich mit einer Mittelachse der Luftfeder 4. Eine Außenmantelfläche 12 einer ringförmigen Außenwand 13 des Abrollkolbens 6 dient als Anlagefläche für den Rollbalg 7. Im Einbauzustand der Luftfeder 4 rollt sich der Rollbalg 7, wenn die Luftfeder 4 bei einem Einfedern der luftgefederten Starrachse 2 zusammengedrückt wird, an der Außenmantelfläche 12 ab.

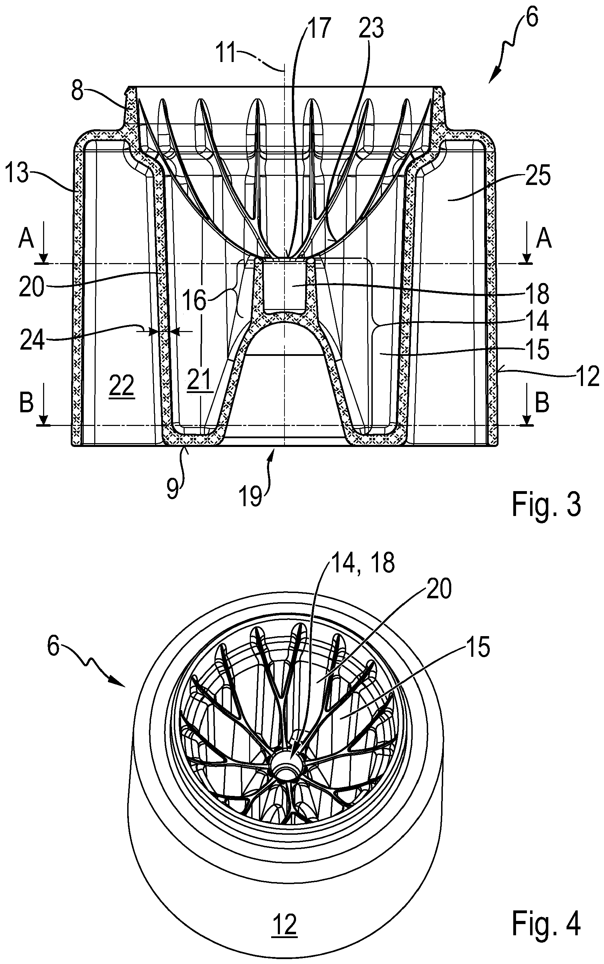

Wie in Fig. 3 zu erkennen, erstreckt sich ein von der Außenwand 13 umschlossener und zugleich konzentrisch zu der Außenwand 13 angeordneter Kern 14 von der Bodenseite 9 des Abrollkolbens 6 ausgehend in Richtung der Mittelachse 11 des Abrollkolbens 6. Im Wesentlichen radial von dem Kern 14 weg erstrecken sich Innenrippen 15. Der Kern 14 weist einen von der Bodenseite 9 des Abrollkolbens 6 beabstandeten Endbereich 16 mit einer Stirnseite 17 auf, die der Bodenseite 9 des Abrollkolbens 6 abgewandt ausgerichtet ist und die zugleich parallel beabstandet zu der Bodenseite 9 ist. In diese Stirnseite 17 ist eine sich in Richtung der Bodenseite 9 erstreckende und zugleich bodenseitig geschlossene Ausnehmung 18 eingelassen. Der Endbereich 16 des Kerns 14 weist im Bereich der Ausnehmung 18 einen im Wesentlichen kreisringförmig ausgebildeten Querschnitt auf. Dieser Querschnitt verjüngt sich über den Verlauf der Ausnehmung 18 in Richtung der Mittelachse 11 von dem bodenseitigen Ende der Ausnehmung 18 nach der Stirnseite 17 des Endbereichs 16 hin stetig, um eine Entformbarkeit des Abrollkolbens 6 nach dem Spritzgießen zu gewährleisten.

Außerhalb des Kerns 14 und zugleich von der Außenwand 13 umschlossen befindet sich eine ringförmig ausgebildete Zwischenwand 20, die sowohl konzentrisch zu der Außenwand 13 als auch konzentrisch zu dem Kern 14 angeordnet ist. Die Zwischenwand 20 ist umfänglich geschlossen und zugleich sowohl rotationssymmetrisch als auch luftundurchlässig ausgebildet. Weiterhin umschließt die Zwischenwand 20 einen, in einem Einbauzustand des Abrollkolbens 6, luftdichten Druckraum 21, der ebenfalls nach der Bodenseite 9 und nach dem Kern 14 hin luftundurchlässig ausgebildet ist. Nach der Bodenseite 9 hin weist der Druckraum 21 eine kreisringförmig ausgebildete Wandung auf. Ein im Wesentlichen hohlzylindrisch ausgebildeter und zugleich zwischen der Zwischenwand 20 und der Außenwand 13 angeordneter Zwischenraum 22 des Abrollkolbens 6 ist nach der Bodenseite 9 hin offen ausgebildet. Der Kern 14 weist einen rotationssymmetrisch zu der Mittelachse 11 ausgebildeten Dom 19 zur Zentrierung und zur werkzeuglos lösbaren Anbindung des Abrollkolbens 6 an einem Luftfederträger 3 auf. Der Dom 19 ist nach der Bodenseite 9 hin offen ausgebildet und verjüngt sich nach der Ausnehmung 18 hin konisch. Dabei weist der Dom 19 einen Kegelwinkel von 30 Grad auf.

Der Bodenseite 9 abgewandt ausgerichtete Stirnseiten 23 der Innenrippen 15 weisen, bei Betrachtung in Ebenen, die die Mittelachse 11 des Abrollkolbens 6 beinhalten, abschnittsweise einen konkav gekrümmten Verlauf auf. Der radiale Verlauf der Stirnseiten 23 entspricht dem Verlauf einer elliptischen Kurve. Das der Bodenseite 9 abgewandte Ende der Zwischenwand 20 geht in den umlaufenden Stutzen 8 zur Anbindung des Rollbalgs 7 an den Abrollkolben 6 über. Das der Bodenseite 9 abgewandte Ende der Zwischenwand 20 weist einen Innendurchmesser auf, der um mehr als die dreifache Wandstärke 24 der Zwischenwand 20 kleiner ist als der Innendurchmesser des Stutzens 8. Die Innendurchmesserreduzierung von dem Stutzen 8 auf das der Bodenseite 9 abgewandte Ende der Zwischenwand 20 ist, bei Betrachtung in einer Schnittebene, die die Mittelachse 11 beinhaltet, S-Schlag-förmig ausgebildet.

Fig. 4, Fig. 5 und Fig. 6 ist zu entnehmen, dass der Kern 14 und die Zwischenwand 20 durch die sich im Wesentlichen radial von dem Kern 14 weg erstreckenden Innenrippen 15 miteinander verbunden sind. Die Innenrippen 14 sind, bei Betrachtung in einer senkrecht der Mittelachse 11 ausgerichteten Ebene, Y-förmig ausgebildet, derart, dass jede Innenrippe 15 in einem Anbindungspunkt an den Kern 14 und in zwei Anbindungspunkten an die Zwischenwand 20 angebunden ist.

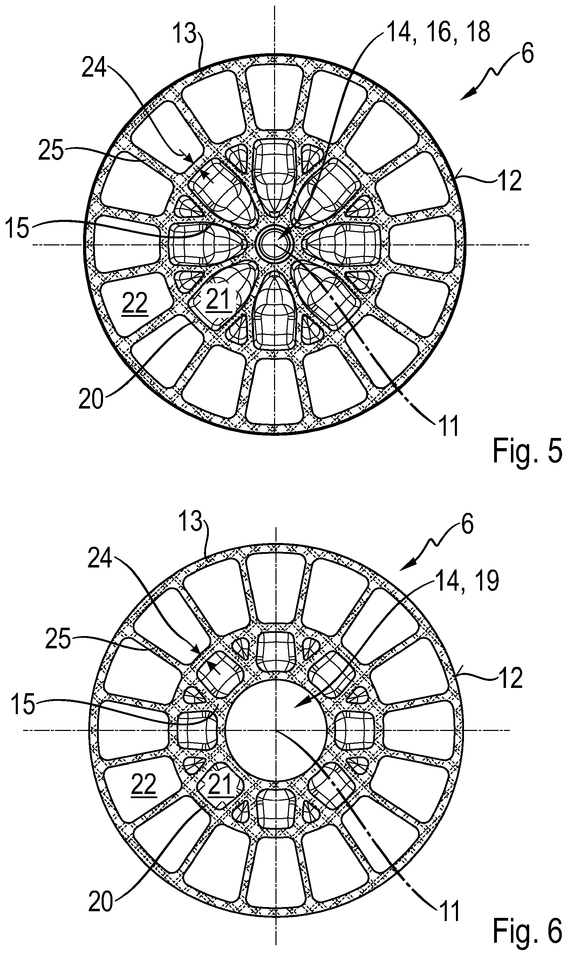

In Fig. 5 und Fig. 6 ist darüber hinaus zu erkennen, dass die Zwischenwand 20 und die Außenwand 13 durch sich radial von der Zwischenwand 20 weg erstreckende Au-βenrippen 25 miteinander verbunden sind. Dabei erstrecken sich die plattenförmig ausgebildeten Außenrippen 25 in Ebenen, die die Mittelachse 11 des Abrollkolbens 6 beinhalten. Bei Betrachtung in der senkrecht zu der Mittelache 11 angeordneten Schnittebene, schließen sich die Außenrippen 25 umfänglich versatzfrei an die Innenrippen 15 an. Die Außenwand 13, die Zwischenwand 20, die Ausnehmung 18 und der Dom 19 sind rotationssymmetrisch ausgebildet. Es ist zu erkennen, dass es sich bei dem Zwischenraum 22 nicht um einen einzigen Zwischenraum, sondern um mehrere kreisringförmig angeordnete Einzelzwischenräume handelt, die jeweils einen Kreisringsegment-Querschnitt aufweisen, der durch zwei benachbarte Außenrippen 25, die Außenwand 13 und die Zwischenwand 20 begrenzt sind. Die Außenrippen 25 weisen an der Zwischenwand 20 eine geringere Erstreckung in Richtung der Mittelachse 11 auf als an der Außenwand 13 (Fig. 3).

### Bezugszeichen

- 1: Fahrwerkanordnung
- 2: Starrachse
- 3: Luftfederträger
- 4: Luftfeder
- 5: Längsträger
- 6: Abrollkolben
- 7: Rollbalg
- 8: Stutzen
- 9: Bodenseite des Abrollkolbens
- 10: Deckel
- 11: Mittelachse des Abrollkolbens
- 12: Außenmantelfläche
- 13: Außenwand
- 14: Kern
- 15: Innenrippe
- 16: Endbereich
- 17: Stirnseite des Endbereichs
- 18: Ausnehmung
- 19: Dom
- 20: Zwischenwand
- 21: Druckraum
- 22: Zwischenraum
- 23: Stirnseite der Innenrippe
- 24: Wandstärke der Zwischenwand
- 25: Außenrippe

## Patentansprüche

1. Abrollkolben (6) für eine Luftfeder (4) eines Kraftfahrzeugs,
- wobei der Abrollkolben (6) aus Kunststoff gebildet ist,
- wobei eine Außenmantelfläche (12) einer ringförmigen Außenwand (13) des Abrollkolbens (6) geeignet ist, in einem Einbauzustand des Abrollkolbens (6) als Anlagefläche für einen Rollbalg (7) der Luftfeder (4) zu fungieren,
- wobei sich ein von der Außenwand (13) umschlossener und zugleich konzentrisch zu der Außenwand (13) angeordneter Kern (14) von einer Bodenseite (9) des Abrollkolbens (6) ausgehend in Richtung einer Mittelachse (11) des Abrollkolbens (6) erstreckt und
- wobei sich Innenrippen (15) zumindest im Wesentlichen radial von dem Kern (14) weg erstrecken,
wobei der Kern (14) einen von der Bodenseite (9) des Abrollkolbens (6) beabstandeten Endbereich (16) mit einer Stirnseite (17) aufweist, die der Bodenseite (9) des Abrollkolbens (6) abgewandt ausgerichtet ist,
**dadurch gekennzeichnet, dass**
in diese Stirnseite (17) eine sich in Richtung der Bodenseite (9) erstreckende und zugleich bodenseitig geschlossene Ausnehmung (18) eingelassen ist, um in einem Einbauzustand des Abrollkolbens (6) durch Schaffung einer Nachgiebigkeit lokale Spannungsspitzen in einem Randbereich der Stirnseite (17), dort, wo die Innenrippen (15) auf den Außenumfang der Stirnseite (17) treffen, zu vermeiden.

2. Abrollkolben (6) nach Anspruch 1, **dadurch gekennzeichnet, dass** der Endbereich (16) des Kerns (14) im Bereich der Ausnehmung (18) zumindest im Wesentlichen einen Ringquerschnitt aufweist.

3. Abrollkolben (6) nach Anspruch 1 oder 2, **dadurch gekennzeichnet, dass** sich außerhalb des Kerns (14), und zugleich von der Außenwand (13) umschlossen, eine ringförmig ausgebildete, luftundurchlässige Zwischenwand (20) befindet, die sowohl konzentrisch zu der Außenwand (13) als auch konzentrisch zu dem Kern (14) angeordnet ist.

4. Abrollkolben (6) nach Anspruch 3, **dadurch gekennzeichnet, dass** die Zwischenwand (20) einen, in einem Einbauzustand des Abrollkolbens (6), luftdichten Druckraum umschließt, der ebenfalls nach der Bodenseite (9) und nach dem Kern (14) hin luftundurchlässig ausgebildet ist.

5. Abrollkolben (6) nach Anspruch 3, **dadurch gekennzeichnet, dass** der Kern (14) und die Zwischenwand (20) durch die sich zumindest im Wesentlichen radial von dem Kern (14) weg erstreckenden Innenrippen (15) miteinander verbunden sind.

6. Abrollkolben (6) nach Anspruch 3, **dadurch gekennzeichnet, dass** die sich zumindest im Wesentlichen radial von dem Kern (14) weg erstreckenden Innenrippen (15), bei Betrachtung in einer senkrecht der Mittelachse (11) ausgerichteten Ebene, Y-förmig ausgebildet sind, derart, dass jede Innenrippe (15) in genau einem Anbindungspunkt an den Kern (14) und in genau zwei Anbindungspunkten an die Zwischenwand (20) angebunden ist.

7. Abrollkolben (6) nach Anspruch 3, **dadurch gekennzeichnet, dass** ein im Wesentlichen hohlzylindrisch ausgebildeter Zwischenraum (22), der zwischen der Zwischenwand (20) und der Außenwand (13) angeordnet ist, nach der Bodenseite (9) hin offen ausgebildet ist.

8. Abrollkolben (6) nach Anspruch 3, **dadurch gekennzeichnet, dass** die Zwischenwand (20) und die Außenwand (13) durch sich radial von der Zwischenwand (20) weg erstreckende Außenrippen (25) miteinander verbunden sind.

9. Abrollkolben (6) nach einem der vorhergehenden Ansprüche, **dadurch gekennzeichnet, dass** der Bodenseite (9) abgewandt ausgerichtete Stirnseiten (23) der Innenrippen (15), bei Betrachtung in Ebenen, die die Mittelachse (11) des Abrollkolbens (6) beinhalten, zumindest abschnittsweise einen konkav gekrümmten Verlauf aufweisen.

10. Abrollkolben (6) nach Anspruch 3, **dadurch gekennzeichnet, dass** das der Bodenseite (9) abgewandte Ende der Zwischenwand (20) in einen umlaufenden Stutzen (8) zur Anbindung eines Rollbalgs (7) an den Abrollkolben (6) übergeht und dass das der Bodenseite (9) abgewandte Ende der Zwischenwand (20) einen Innendurchmesser aufweist, der vorteilhaft um mehr als die doppelte, bevorzugt um mehr als die dreifache und besonders bevorzugt um im Wesentlichen die vierfache Wandstärke (24) der Zwischenwand (20) kleiner ist als der Innendurchmesser des Stutzens (8).

11. Abrollkolben (6) nach einem der vorhergehenden Ansprüche, **dadurch gekennzeichnet, dass** der Kern (14) einen rotationssymmetrisch zu der Mittelachse (11) ausgebildeten Dom (19) zur werkzeuglos lösbaren Anbindung des Abrollkolbens (6) an ein Anschlussbauteil über eine Kegelverbindung aufweist, wobei der Dom (19) nach der Bodenseite (9) hin offen ausgebildet ist und sich nach der Ausnehmung (18) hin konisch verjüngt.

12. Abrollkolben (6) nach einem der vorhergehenden Ansprüche, **dadurch gekennzeichnet, dass** der Abrollkolben (6) in einem Arbeitsgang in einem Spritzgussverfahren einbaufertig herstellbar ist.

13. Luftfeder (4) für ein Kraftfahrzeug, wobei die Luftfeder (4) einen Abrollkolben (6) nach einem der Ansprüche 1 bis 12 aufweist, **dadurch gekennzeichnet, dass** ein Rollbalg (7) der Luftfeder (4) luftdicht an einen Stutzen (8) des Abrollkolbens (6) angebunden ist.

## Claims

1. Rolling piston (6) for a pneumatic spring (4) of a motor vehicle,
- wherein the rolling piston (6) is formed from plastic,
- wherein an outer lateral surface (12) of an annular outer wall (13) of the rolling piston (6) is suitable for acting as an abutment surface for a rolling bellows (7) of the pneumatic spring (4) in an installed state of the rolling piston (6),
- wherein a core (14) which is surrounded by the outer wall (13) and is arranged at the same time concentrically with respect to the outer wall (13) extends from a bottom side (9) of the rolling piston (6) in the direction of a centre axis (11) of the rolling piston (6), and
- wherein inner ribs (15) extend at least substantially radially away from the core (14), wherein the core (14) has an end region (16) which is spaced apart from the bottom side (9) of the rolling piston (6) and has an end face (17) which is oriented facing away from the bottom side (9) of the rolling piston (6),
**characterized in that** a recess (18) extending in the direction of the bottom side (9) and at the same time closed on the bottom side is let into said end face (17) in order, in an installed state of the rolling piston (6), by creating flexibility, to avoid local stress peaks in an edge region of the end face (17) where the inner ribs (15) strike against the outer circumference of the end face (17).

2. Rolling piston (6) according to Claim 1, **characterized in that** the end region (16) of the core (14) has at least substantially an annular cross section in the region of the recess (18).

3. Rolling piston (6) according to Claim 1 or 2, **characterized in that** outside the core (14), and at the same time surrounded by the outer wall (13), there is an annularly formed, air-impermeable intermediate wall (20) which is arranged both concentrically with respect to the outer wall (13) and concentrically with respect to the core (14).

4. Rolling piston (6) according to Claim 3, **characterized in that** the intermediate wall (20) surrounds a pressure chamber which, in an installed state of the rolling piston (6), is air-tight and is likewise air-impermeable towards the bottom side (9) and towards the core (14).

5. Rolling piston (6) according to Claim 3, **characterized in that** the core (14) and the intermediate wall (20) are connected to each other by the inner ribs (15) extending at least substantially radially away from the core (14).

6. Rolling piston (6) according to Claim 3, **characterized in that** the inner ribs (15) extending at least substantially radially away from the core (14) are Y-shaped, when viewed in a plane oriented perpendicularly to the centre axis (11), in such a manner that each inner rib (15) is connected to the core (14) at precisely one connection point and to the intermediate wall (20) at precisely two connection points.

7. Rolling piston (6) according to Claim 3, **characterized in that** a substantially hollow-cylindrical intermediate space (22) arranged between the intermediate wall (20) and the outer wall (13) is open towards the bottom side (9).

8. Rolling piston (6) according to Claim 3, **characterized in that** the intermediate wall (20) and the outer wall (13) are connected to each other by outer ribs (25) extending radially away from the intermediate wall (20) .

9. Rolling piston (6) according to one of the preceding claims, **characterized in that** end faces (23) of the inner ribs (15) that are oriented facing away from the bottom side (9) have a concavely curved profile at least in certain sections, when viewed in planes containing the centre axis (11) of the rolling piston (6).

10. Rolling piston (6) according to Claim 3, **characterized in that** the end of the intermediate wall (20) that faces away from the bottom side (9) merges into a peripheral stub (8) for connecting a rolling bellows (7) to the rolling piston (6), and **in that** the end of the intermediate wall (20) that faces away from the bottom side (9) has an inner diameter which is advantageously smaller than the inner diameter of the stub (8) by more than twice, preferably by more than three times and particularly preferably by substantially four times, the wall thickness (24) of the intermediate wall (20).

11. Rolling piston (6) according to one of the preceding claims, **characterized in that** the core (14) has a dome (19), which is formed rotationally symmetrically with respect to the centre axis (11), for the tool-free releasable connection of the rolling piston (6) to a connection component via a tapered connection, wherein the dome (19) is open towards the bottom side (9) and tapers conically towards the recess (18).

12. Rolling piston (6) according to one of the preceding claims, **characterized in that** the rolling piston (6) can be produced ready for installation in one working step by injection moulding.

13. Pneumatic spring (4) for a motor vehicle, wherein the pneumatic spring (4) has a rolling piston (6) according to one of Claims 1 to 12, **characterized in that** a rolling bellows (7) of the pneumatic spring (4) is connected air-tightly to a stub (8) of the rolling piston (6) .

## Revendications

1. Piston dérouleur (6) pour un ressort pneumatique (4) d'un véhicule automobile,
- le piston dérouleur (6) étant formé en matière plastique,
- une surface d'enveloppe extérieure (12) d'une paroi extérieure annulaire (13) du piston dérouleur (6) étant appropriée pour servir de surface d'appui pour un soufflet roulant (7) du ressort pneumatique (4) dans un état de montage du piston dérouleur (6),
- un noyau (14) entouré par la paroi extérieure (13) et agencé en même temps concentriquement par rapport à la paroi extérieure (13) s'étendant à partir d'un côté de fond (9) du piston dérouleur (6) en direction d'un axe central (11) du piston dérouleur (6) et
- des nervures intérieures (15) s'étendant au moins essentiellement radialement à partir du noyau (14),
le noyau (14) présentant une zone d'extrémité (16) espacée du côté de fond (9) du piston dérouleur (6) avec un côté frontal (17) qui est orienté détourné du côté de fond (9) du piston dérouleur (6),
**caractérisé en ce que**
dans ce côté frontal (17) est encastré un évidement (18) s'étendant en direction du côté de fond (9) et en même temps fermé du côté du fond, pour éviter, dans un état de montage du piston dérouleur (6), des pointes de tension locales dans une zone de bord du côté frontal (17), là où les nervures intérieures (15) rencontrent la périphérie extérieure du côté frontal (17), en créant une flexibilité.

2. Piston dérouleur (6) selon la revendication 1, **caractérisé en ce que** la zone d'extrémité (16) du noyau (14) présente au moins essentiellement une section transversale annulaire dans la zone de l'évidement (18).

3. Piston dérouleur (6) selon la revendication 1 ou 2, **caractérisé en ce qu'**à l'extérieur du noyau (14), et en même temps entouré par la paroi extérieure (13), se trouve une paroi intermédiaire (20) imperméable à l'air, réalisée sous forme annulaire, qui est agencée aussi bien concentriquement à la paroi extérieure (13) que concentriquement au noyau (14).

4. Piston dérouleur (6) selon la revendication 3, **caractérisé en ce que** la paroi intermédiaire (20) entoure un espace de pression étanche à l'air dans un état de montage du piston dérouleur (6), qui est également réalisé sous forme imperméable à l'air vers le côté de fond (9) et vers le noyau (14).

5. Piston dérouleur (6) selon la revendication 3, **caractérisé en ce que** le noyau (14) et la paroi intermédiaire (20) sont reliés entre eux par les nervures intérieures (15) s'étendant au moins essentiellement radialement à partir du noyau (14).

6. Piston dérouleur (6) selon la revendication 3, **caractérisé en ce que** les nervures intérieures (15) s'étendant au moins essentiellement radialement à partir du noyau (14), vues dans un plan orienté perpendiculairement à l'axe central (11), sont réalisées en forme de Y, de telle sorte que chaque nervure intérieure (15) est attachée au noyau (14) en exactement un point d'attache et à la paroi intermédiaire (20) en exactement deux points d'attache.

7. Piston dérouleur (6) selon la revendication 3, **caractérisé en ce qu'**un espace intermédiaire (22) réalisé sous forme essentiellement cylindrique creuse, qui est agencé entre la paroi intermédiaire (20) et la paroi extérieure (13), est réalisé ouvert vers le côté de fond (9) .

8. Piston dérouleur (6) selon la revendication 3, **caractérisé en ce que** la paroi intermédiaire (20) et la paroi extérieure (13) sont reliées entre elles par des nervures extérieures (25) s'étendant radialement à partir de la paroi intermédiaire (20).

9. Piston dérouleur (6) selon l'une quelconque des revendications précédentes, **caractérisé en ce que** les côtés frontaux (23) des nervures intérieures (15) orientés détournés du côté de fond (9), vus dans des plans contenant l'axe central (11) du piston dérouleur (6), présentent au moins par sections un tracé incurvé concave.

10. Piston dérouleur (6) selon la revendication 3, **caractérisé en ce que** l'extrémité de la paroi intermédiaire (20) détournée du côté de fond (9) se transforme en une tubulure périphérique (8) pour l'attache d'un soufflet roulant (7) au piston dérouleur (6) et **en ce que** l'extrémité de la paroi intermédiaire (20) détournée du côté de fond (9) présente un diamètre intérieur, qui est avantageusement inférieur au diamètre intérieur de la tubulure (8) de plus du double, de préférence de plus du triple et de manière particulièrement préférée d'essentiellement quatre fois l'épaisseur de paroi (24) de la paroi intermédiaire (20).

11. Piston dérouleur (6) selon l'une quelconque des revendications précédentes, **caractérisé en ce que** le noyau (14) présente un dôme (19) réalisé à symétrie de rotation par rapport à l'axe central (11) pour l'attache amovible sans outil du piston dérouleur (6) à un composant de raccordement par l'intermédiaire d'une liaison conique, le dôme (19) étant réalisé ouvert vers le côté de fond (9) et se rétrécissant sous forme conique vers l'évidement (18).

12. Piston dérouleur (6) selon l'une quelconque des revendications précédentes, **caractérisé en ce que** le piston dérouleur (6) peut être fabriqué prêt au montage en une opération dans un procédé de moulage par injection.

13. Ressort pneumatique (4) pour un véhicule automobile, le ressort pneumatique (4) présentant un piston dérouleur (6) selon l'une quelconque des revendications 1 à 12, **caractérisé en ce qu'**un soufflet roulant (7) du ressort pneumatique (4) est attaché de manière étanche à l'air à une tubulure (8) du piston dérouleur (6).
